# EUROPÄISCHE PATENTSCHRIFT

(11) **EP 1 381 926 B1**
(45) Veröffentlichungstag und Bekanntmachung des Hinweises auf die Patenterteilung: **28.12.2011**
(21) Anmeldenummer: 02735292.1
(22) Anmeldetag: 24.04.2002
(51) Int. Cl.: G05G 1/08, G05G 9/047, G05G 5/06, G05G 5/03

(54) **DREHSTELLER**
ROTATING ACTUATOR
ACTIONNEUR ROTATIF

(30) Priorität: 26.04.2001 DE 10120618
(43) Veröffentlichungstag der Anmeldung: 21.01.2004
(73) Patentinhaber: Leopold Kostal GmbH & Co. KG, 58507 Lüdenscheid (DE)
(72) Erfinder: OSTER, Christoph, 58509 Lüdenscheid (DE)
(86) Internationale Anmeldenummer: PCT/EP2002/004481
(87) Internationale Veröffentlichungsnummer: WO 2002/088864

(56) Entgegenhaltungen:
- EP-A- 0 565 143
- EP-A2- 0 961 305
- EP-A2- 0 961 305
- DE-A- 19 646 226
- DE-A- 19 712 049

## Beschreibung

Die Erfindung betrifft einen Drehsteller gemäß dem Oberbegriff des Patentanspruchs 1.

Drehsteller werden beispielsweise bei Dateneingabegeräten eingesetzt, bei denen durch Drehen des Drehstellers und gegebenenfalls durch Drücken oder Verschwenken desselben etwa eine Cursorsteuerung in unterschiedlichen Menüebenen durchgeführt werden kann. Beispielsweise kann ein solcher Drehsteller Teil eines sogenannten Joysticks sein. Ein solcher Drehsteller ist bekannt aus der DE 197 12 049 A1. Bei diesem vorbekannten Drehsteller ist getrieblich mit der Stellwelle eine Einrichtung zum Erzeugen einer Haptik gekoppelt. Bei dieser Einrichtung handelt es sich um einen Elektromotor, der entsprechend beaufschlagt ein der Drehwegung entgegengesetztes Drehmoment auf die Stellwelle ausübt. In Abhängigkeit von der Ansteuerung bzw. Aktivierung des Elektromotors sowohl hinsichtlich der den Elektromotor beaufschlagenden Stromstärke als auch in Abhängigkeit von der aktuellen Drehwinkelstellung der Stellwelle können unterschiedliche Haptiken bereitgestellt werden. Zum Feststellen der aktuellen Drehwinkelstellung ist dem Drehsteller eine Winkeldetektionseinrichtung zugeordnet. Der Drehsteller kann auch ohne eine Ansteuerung des Elektromotors und somit ohne eine die Drehbewegung prägende Haptik betrieben werden. Es ist daher möglich, dass ein und derselbe Drehsteller sowohl ohne als auch mit einer vorbestimmten Haptik oder auch mit unterschiedlichen Haptiken in Abhängigkeit von dem jeweiligen Modus des Drehstellers betrieben wird. Dies ist vorteilhaft gegenüber solchen Drehstellern, die zum Erzeugen einer Haptik beim Drehen der Handhabe eine Haptikerzeugungseinrichtung nach Art einer mechanischen Rastung mit einer Rastkurve und zumindest einem in die Rastkurve eingreifenden Rastelement aufweisen. Bei diesen mechanischen Haptikerzeugungseinrichtungen ist ein Zu- bzw. Abschalten der Haptik und insbesondere auch ein Umschalten der Haptik nicht möglich.

Durch den aus diesem Dokument bekannten Drehsteller läßt sich ebenfalls durch entsprechende Bestromung des Elektromotors ein Endanschlag stimulieren. Nachteilig ist bei dieser Ausgestaltung jedoch, dass die Simulation eines Endanschlages bei diesem Drehsteller nicht nur einen hohen Stromverbrauch zur Folge hat, sondern dass die durch den Elektromotor bereitgestellte, den Endanschlag simulierende Gegenkraft auch überwunden werden kann. Die Bereitstellung eines für einen Benutzer nicht ohne weiteres überwindbaren Endanschlages bedarf einer zumindest im Automotiv-Bereich nicht vertretbaren Bereitstellung entsprechend konzipierter elektrischer/elektronischer Komponenten. Überdies steht beispielsweise in einem Kraftfahrzeug mitunter nicht der dazu benötigte Strom immer zur Verfügung.

Aus DE 196 46 226 A1 ist ein weiterer Drehsteller bekannt, der eine zu- und abschaltbare Anschlageinrichtung aufweist. Drehfest mit der Stellwelle verbunden ist ein mit Taschen versehenes Rad, in das die Kugel einer Rasteinrichtung eingreift, so dass ein Drehen des Rades rastend erfolgt. Auf die Kugel wirkt eine Druckfeder, auf die wiederum ein Elektromagnet einwirkend angeordnet ist, mit dem die auf die Kugel wirkende Federvorspannung einstellbar ist. Der Elektromagnet selbst stützt sich an einem gegenüber der Stellwelle ortsfesten Widerlager ab. Dieses Widerlager ist radial zur Stellwelle angeordnet. Diese Anschlageinrichtung kann so eingestellt werden, dass durch den Elektromagneten die Feder auf Block gebracht ist und somit die Kugel in eine Tasche des der Stellwelle zugeordneten Rades riegelartig eingreift und eine Drehbewegung blockiert. Die Kugel ist dann paßgenau in einer solchen Tasche aufgenommen.

Bei dieser mechanisch auf die Stellwelle einwirkenden Anschlageinrichtung wird als nachteilig empfunden, dass ein Anschlag immer nur in denjenigen Stellungen des Rades mit seinen Taschen zur Kugel gesetzt werden kann, in der diese in eine Tasche des Rades eingreifen kann. In Zwischenstellungen ist daher ein Anschlag nicht realisierbar. Um die die Drehbewegung der Stellwelle behindernde zugeschaltete Anschlageinrichtung wieder abzuschalten, um die Stellwelle erneut drehen und somit betätigen zu können, muß zuvor durch eine zusätzliche Betätigung der Elektromagnet stromlos oder mit einem geringeren Strom bestromt geschaltet werden, damit die Stellwelle rastend weitergedreht werden kann. Die Vornahme eines solchen zusätzlichen und aktiv auszuführenden Bedienungsschrittes ist unzweckmäßig.

Aus der EP 0 961 305 A2 ist ein Drehsteller gemäß dem Oberbegriff des Patentanspruchs 1 bekannt. Bei diesem Drehsteller ist eine steuerbare Rast- und Verriegelungseinrichtung vorgesehen, durch die ein Drehknopf wahlweise verriegelbar ist, um einen Anschlag für die Drehbewegung bereitzustellen.

Ausgehend von diesem diskutierten Stand der Technik liegt der Erfindung daher die Aufgabe zugrunde, einen eingangs genannten gattungsgemäßen Drehsteller dergestalt weiter zu bilden, dass bei diesem mit einer Anschlageinrichtung in quasi beliebigen Drehwinkelpositionen der Stellwelle ein Anschlag zur Begrenzung einer Drehrichtung gesetzt werden kann, der nicht ohne weiteres überwunden werden kann, wobei jedoch ein Drehen der Stellwelle in der anderen Drehrichtung weiterhin ermöglicht sein soll.

Diese Aufgabe wird erfindungsgemäß gelöst durch die kennzeichnenden Merkmale des Patentanspruchs 1.

Bei dem erfindungsgemäßen Drehsteller ist zum Begrenzen der Drehbewegung der Stellwelle eine einzige Anschlageinrichtung vorgesehen, mit der eine Blockierung einer Drehbewegung der Stellwelle in beide Richtungen erfolgt. Die Stellwelle ist durch die Anschlageinrichtung jedoch mit Spiel in der von dem drehrichtungsbegrenzenden Anschlag einer mechanisch auf die Stellwelle wirkenden Anschlaganordnung weg weisenden Richtung durch die Anschlageinrichtung behindert. Dabei ist das vorgesehene Spiel in dieser Richtung so bemessen, dass eine Drehbewegung der Stellwelle oder Handhabe in der von dem wirksamen Anschlag weg gerichteten Richtung zumindest in einem solchen Maße möglich ist, dass diese Drehbewegung durch die Winkeldetektionseinrichtung erfaßbar ist. Folglich ist auch beim Gegenstand dieses Drehstellers eine Aufhebung der Anschlagwirkung in einer Drehrichtung allein durch eine von dem Anschlag weg gerichtete Drehbewegung des Drehstellers möglich. Entsprechend umgekehrt wird die andere Drehrichtung der Stellwelle durch die Anschlageinrichtung blockiert.

Der vorgestellte Drehsteller ist bezüglich seiner Anschlageinrichtung dergestalt ausgebildet, dass diese einen die Stellwelle konzentrisch umgebenden und an die Drehbewegung der Stellwelle gekoppelten Ringkörper umfassen. Ferner ist einer solchen Anschlageinrichtung eine gegenüber einer Drehbewegung des Ringkörpers ortsfest angeordnete Aktiviereinrichtung zugeordnet, über die eine Aktivierung der Anschlageinrichtung zum Blockieren bzw. Behindern der Drehbewegung des Ringkörpers vorgesehen ist. Beispielsweise kann eine solche Aktiviereinrichtung ein den Ringkörper konzentrisch umgebender offener Ring nach Art einer Schelle sein, dessen freie Enden über die Aktiviereinrichtung miteinander verbunden sind. Dieser schellenartige Ring ist nach einer Aktivierung der Aktiviereinrichtung drehfest mit dem die Stellwelle umgebenden Ringkörper verbunden - reibschlüssig oder formschlüssig. Als Aktiviereinrichtung kann beispielsweise ein Elektromagnet oder ein mit einer Heizeinrichtung beheizbares Memory-Metall eingesetzt sein.

Ein Anschlagglied ist der Stellwelle oder dem Ringkörper zugeordnet. Dem jeweils anderen Element - Ringkörper bzw. Stellwelle - ist eine zu dem jeweils anderen Element - Stellwelle bzw. Ringkörper - hin offene Tasche zugeordnet, in die das Anschlagglied eingreift. Die rechten und linken Begrenzungen einer solchen Tasche bilden dann die Anschläge für das Anschlagglied. Das notwendige Spiel in der Anschlaganordnung wird durch einen entsprechenden Freiraum zwischen dem Anschlagglied und seinen seitlichen Begrenzungen geschaffen. Dabei kann es zweckmäßig sein, das Anschlagglied im wesentlichen zentriert in einer solchen Anschlaganordnung zumindest bei einer Nichtbetätigung der Handhabe anzuordnen. Realisiert kann dies beispielsweise dadurch sein, dass zwischen den rechten und linken Begrenzungen einer solchen Tasche und dem Anschlagglied sich an dem Anschlagglied abstützende Federelemente angeordnet sind.

In einer besonders zweckmäßigen Ausgestaltung eines solchen Drehstellers weist dieser nicht nur eine Anschlageinrichtung auf, sondern ebenfalls eine zu- und abschaltbare Einrichtung zum Erzeugen einer Haptik beim Drehen der Handhabe. Diese Haptikerzeugungseinrichtung ist zweckmäßigerweise nach Art einer mechanischen Rastung ausgebildet, wodurch eine präzise vorbestimmte Haptik beim Drehen der Stellwelle bereitgestellt ist. Dieser Drehsteller umfaßt ferner eine Aktiviereinrichtung, zweckmäßigerweise elektromagnetisch betätigbar, die auf zumindest eines der beiden zur Erzeugung der Haptik mechanisch zusammenwirkenden Elemente - Rastkurve bzw. Rastelement - wirkt. Mit einer Betätigung bzw. Ansteuerung der Aktiviereinrichtung ist das Zusammenwirken zwischen Rastkurve und dem zumindest einen Rastelement zu- bzw. abschaltbar. Die Aktiviereinrichtung kann ausgelegt sein, um beispielsweise auf das zumindest eine Rastelement einzuwirken und dieses je nach Auslegung der Aktiviereinrichtung bei ihrer Aktivierung in die Rastkurve eingreifen oder von der Rastkurve abgehoben zu lassen. In entsprechender Weise kann die Aktiviereinrichtung auch auf die Rastkurve bzw. den die Rastkurve tragenden Körper wirkend angeordnet sein. Bei dieser Ausgestaltung greift das zumindest eine Rastelement unter Federvorspannung stehend in die Rastkurve ein. Die Rastkurve ist zweckmäßigerweise einem Ringkörper zugeordnet, der konzentrisch die Stellwelle umgibt. Ohne eine Betätigung der Aktiviereinrichtung wird bei einem Drehen der Stellwelle die Rastkurve entsprechend der Drehbewegung infolge des in die Rastkurve eingreifenden Rastelementes mitbewegt, so daß in diesem Modus des Drehstellers keine Haptik spürbar ist. Erst beim Ansteuern der Aktiviereinrichtung wird der die Rastkurve tragende Körper gegenüber einer Drehbewegung der Stellwelle festgelegt, so daß anschließend beim Drehen der Stellwelle das zumindest eine Rastelement über die Rastkurve zum Erzeugen der gewünschten Haptik geführt wird. Eine solche Ausgestaltung hat den Vorteil, daß beim Umschalten von einer Haptik auf eine weitere Haptik unerwünschte Stellwellenbewegungen resultierend aus einem gegebenenfalls nicht in eine Vertiefung exakt eingreifenden Rastelement vermieden sind. Derartige, haptikbedingte Bewegungen der Stellwelle sind in manchen Anwendungen unerwünscht.

Nachfolgend ist die Erfindung anhand von Ausführungsbeispielen unter Bezugnahme auf die beigefügten Figuren beschrieben. Es zeigen:
- Fig. 1:: Eine dreidimensionale Darstellung eines Drehstellers nach Art einer Explosionsdarstellung,
- Fig. 2:: Den Drehsteller der Figur 1 in seinem montierten Zustand in einer dreidimensionalen Ansicht mit Blickrichtung auf eine Haptikerzeugungseinrichtung,
- Fig. 3:: Einen Längsschnitt durch den Drehsteller der Figur 2 eingesetzt in einen Joystick,
- Fig.4:: Einen schematisierten Querschnitt durch einen weiteren Drehsteller mit einer Anschlageinrichtung mit nicht aktivierter Anschlageinrichtung und
- Fig. 5:: Den Drehsteller der Figur 4 mit aktivierter Anschlageinrichtung.

Ein Drehsteller 1 umfaßt eine drehbar gelagerte Stellwelle 2, an deren bedienseitigem Ende als Handhabe ein Drehknopf 3 angebracht ist. Die Stellwelle 2 durchgreift eine Blende 4, so daß die unterhalb des Drehknopfes 3 befindlichen Stellwellenabschnitte durch die Blende 4 bedeckt sind. Der Drehsteller 1 umfaßt ferner eine Haptikerzeugungseinrichtung 5, zu der bei dem in den Figuren dargestellten Ausführungsbeispiel zwei Rastkurvenringe 6, 7, ein mit der Stellwelle 2 verbundener Bremsflansch 8 sowie um 90° versetzt zueinander angeordnete Rasthülsenbaugruppen 9, 10 gehören, die jeweils aus zwei einander gegenüberliegenden und durch eine Druckfeder 11 sich gegenseitig abstützenden Rastbolzen 12, 12' bestehen. Die Rastbolzen 12, 12' sind zusammen mit der Druckfeder 11 in jeweils einer hülsenartigen Aufnahme 13 der Stellwelle 2 angeordnet. Die Rastkurvenringe 6, 7 sind schwimmend zur Drehbewegung der Stellwelle 2 gelagert. Die Haptikerzeugungseinrichtung 5 umfaßt ferner drei in einer Spannglocke 14 zusammengefaßte Aktiviereinrichtungen 15, 16, 17. Die Aktiviereinrichtungen 15, 16, 17 sind aufgebaut nach Art eines Spannringes und elektromagnetisch betätigbar. Eine Aktiviereinrichtung umfaßt somit einen Spannring 18 - an der Aktiviereinrichtung 15 dargestellt - sowie einen Elektromagneten 19 zum Betätigen des Spannringes 18. Bei einer Betätigung des Elektromagneten 19 ist ein Spannen des Spannringes 18 herbeiführbar. Die übrigen Aktiviereinrichtungen 16, 17 sind entsprechend aufgebaut. Die Aktiviereinrichtungen 15, 16 umgeben mit ihren Spannringen 18 den Rastkurvenring 6 bzw. 7. Dabei ist vorgesehen, daß der Innendurchmesser der Spannringe 18 geringfügig größer als der Außendurchmesser der Rastkurvenringe 6, 7 ist. Eine Betätigung des Elektromagneten 19 einer Aktiviereinrichtung 15, 16 führt zu einer Festlegung des jeweiligen Rastkurvenringes 6 bzw. 7, da dieser in dem Spannring 18 reibschlüssig gehalten ist. Die Spannglocke 14 ist mit ihren Aktiviereinrichtungen 15, 16, 17 bezüglich einer Drehbewegung der Stellwelle 2 ortsfest angeordnet.

Die Aktiviereinrichtung 17 wirkt mit dem Bremsflansch 8 in entsprechender Art und Weise zusammen, so daß durch eine Betätigung des Elektromagneten dieser Aktiviereinrichtung 17 eine Erhöhung des notwendigen Drehmomentes zum Ausüben einer Drehbewegung der Stellwelle 2 oder auch zum Verhindern und Blockieren einer Drehbewegung eingesetzt werden kann. Letzteres ist später näher erläutert.

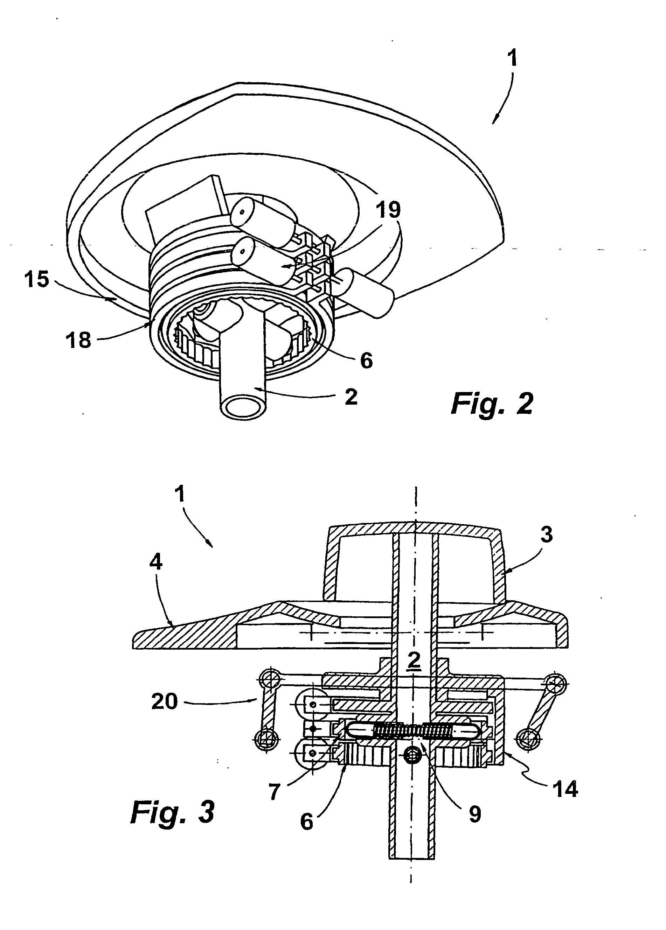

Im montierten Zustand des Drehstellers 1 greifen die beiden Rastbolzen 12, 12' jeweils diametral gegenüberliegend in die Rastkurve jeweils eines Rastkurvenringes 6, 7 ein. Dieses ist aus einer Ansicht von unten in Figur 2 erkennbar. Bei einem Drehen des Drehstellers 1 ohne eine Betätigung des Elektromagneten einer Aktiviereinrichtung 15, 16, 17 ist die Stellwelle 2 ohne eine durch die Rastkurvenringe 6, 7 bereitgestellte Haptik drehbar. Durch das Eingreifen der unter Federvorspannung stehenden Rastbolzen 12, 12' in die Rastkurve eines jeden Rastkurvenringes 6, 7, werden diese bei einer Drehbewegung der Stellwelle 2 mitbewegt. Bei einer Aktivierung eines Elektromagneten einer Aktiviereinrichtung, beispielsweise des Elektromagneten 19 der Aktiviereinrichtung 15 wird der Spannring 18 geschlossen, so daß der von dem Spannring 18 eingeschlossene Rastkurvenring 6 gegenüber einer Drehbewegung der Stellwelle 2 festgelegt ist. Bei einem Drehen der Stellwelle 2 werden nunmehr die beiden Rastbolzen 12, 12' in der Rastkurve des Rastkurvenringes 6 bewegt, so daß eine haptische Drehbewegung entsprechend der in dem Rastkurvenring 6 enthaltenen Rastkurve erfolgt.

Zur Realisierung eines haptischen Anschlages kann die Aktiviereinrichtung 17 dergestalt angesteuert werden, daß durch Spannen des Spannringes dieser Aktiviereinrichtung 17 eine Drehbewegung der Stellwelle 2 verhindert ist.

Die Aktiviereinrichtungen 15, 16, 17 sind einzeln oder auch gruppenweise zum Erzeugen unterschiedlicher Haptiken ansteuerbar.

Figur 3 zeigt den Drehsteller 1 in einem Längsschnitt, wobei bei dieser Ausgestaltung der Drehsteller 1 Teil eines nicht näher dargestellten Joysticks ist. Die Stellwelle 2 und entsprechend auch der Drehknopf 3 sind zusammen mit der die Aktiviereinrichtungen 15, 16, 17 enthaltenen Spannglocke 14 verschwenkbar gelagert; Figur 3 zeigt den Drehsteller 1 in seiner aus der Nullstellung herausgeschwenkten Stellung.

Die mit einfachen Mitteln zu realisierenden haptischen Möglichkeiten bei dem Drehsteller 1 erlauben, daß dieser ohne großen Aufwand Teil eines Joysticks, wie in Figur 3 gezeigt, sein kann, da nur eine einzige Baugruppe - die Spannglocke 14 - mit verschwenkt werden muß. Symbolisiert dargestellt ist in Figur 3 ein Gestänge 20, über welches die Verschwenkbewegung der Stellwelle 2 geführt ist.

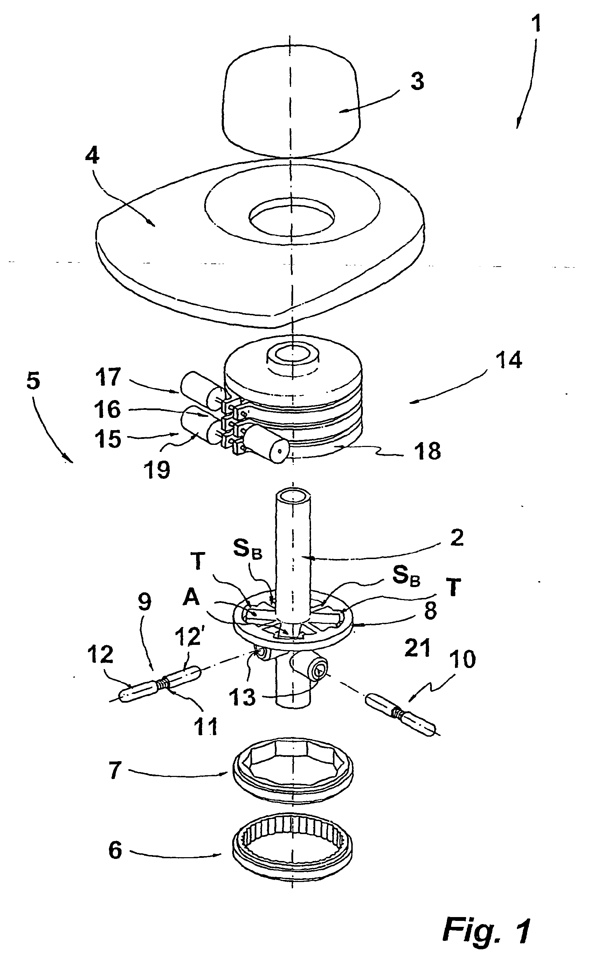

Der in Figur 1 gezeigte Bremsflansch 8 besteht aus einem die Stellwelle 2 umgebenden Ringkörper 21, der über mehrere materialelastische Biegespeichen S_{B} mit der Stellwelle 2 körperlich verbunden ist. Die Biegespeichen S_{B} gestatten eine drehende Relativbewegung des Ringkörpers 21 gegenüber der Stellwelle 2. Zur Stellwelle 2 offen sind in den Ringkörper 21 Taschen T eingebracht, in die jeweils ein drehfest mit der Stellwelle 2 verbundener Anschlagbalken A als Anschlagglied mit seinem freien Ende eingreift. Die seitlichen Begrenzungen einer solchen Tasche T stellen jeweils rechte und linke Anschläge bezüglich eines Anschlagbalkens A dar. Die beiden durch eine Tasche T gebildeten Anschläge stellen somit eine Anschlaganordnung dar. Bei einer Aktivierung der Aktiviereinrichtung 17 ist eine Drehbewegung des Ringkörpers 21 blockiert. Die Stellwelle 2 kann daher nur noch im Bereich des Spiels, mit dem ein Anschlagbalken A in eine Tasche T eingreift, bewegt werden. In Figur 1 dargestellt befinden sich die Anschlagbalken A etwa mittig innerhalb jeder Tasche. Bei Wirksamwerden der Aktiviereinrichtung 17, wodurch ein Anschlag einer Drehbewegung der Stellwelle bereitgestellt werden soll, liegen die Anschlagbalken A an jeweils einem durch jede Tasche T bereitgestellten Anschlag an, nämlich an demjenigen, der die aktuell durchgeführte Drehbewegung der Stellwelle 2 begrenzen soll. Bei aktivierter Aktiviereinrichtung 17 und somit blockierter Drehbewegung des Ringkörpers 21 kann dann die Stellwelle 2 um das gesamte verbleibende Spiel in die dem Anschlag entgegengesetzte Richtung zurückgedreht werden, obwohl die Anschlageinrichtung aktiviert ist und grundsätzlich eine Drehbewegung der Stellwelle 2 gesperrt ist.

Nicht dargestellt in Figur 1 ist eine Winkeldetektionseinrichtung, mit der die Drehwinkelstellung der Stellwelle 2 erfaßbar ist. Eine solche Winkeldetektionseinrichtung kann beispielsweise magnetisch oder optoelektronisch realisiert sein. In jedem Fall sind die Winkeldetektionseinrichtung bezüglich ihres Auflösungsvermögens und das zwischen den Anschlagbalken A und den Anschlägen einer Anschlaganordnung befindliche Spiel so aufeinander abgestimmt, daß eine solche, zuvor genannte, einem Anschlag entgegengesetzte Drehbewegung der Stellwelle 2 durch die Winkeldetektionseinrichtung erfaßbar ist. Das Erfassen einer solchen Drehbewegung der Stellwelle 2 führt anschließend zu einer Deaktivierung der Aktiviereinrichtung 17 und entsprechend der gesamten Anschlageinrichtung, so daß die Stellwelle 2 bezüglich ihrer Drehbeweglichkeit wiederum freigegeben ist.

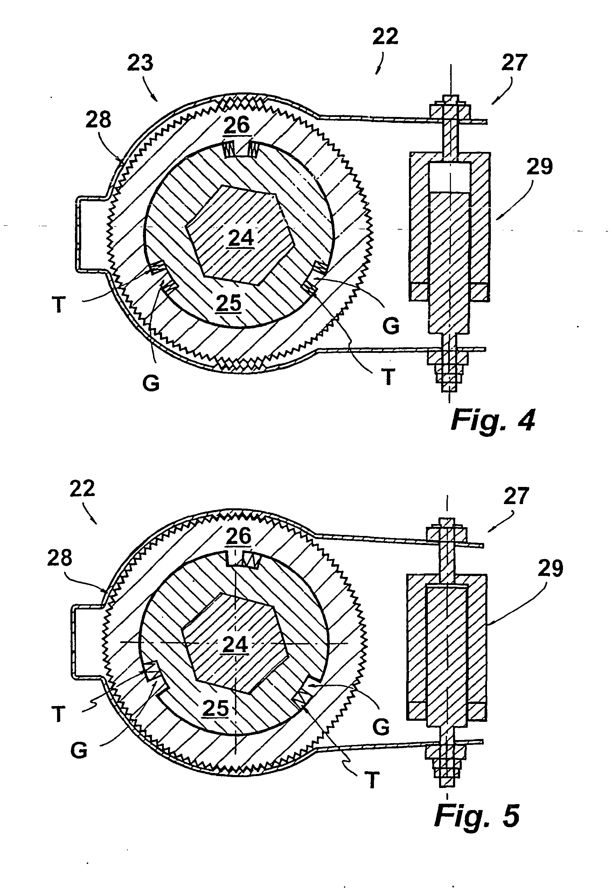

Figur 4 zeigt einen weiteren Drehsteller 22, der prinzipiell ähnlich aufgebaut ist wie der Drehsteller 1 der Figuren 1 - 3. Im Unterschied zur Ausgestaltung des Drehstellers 1 ist die Anschlageinrichtung 23 dieses Drehstellers 22 unterschiedlich ausgebildet. Die Anschlageinrichtung 23 umfaßt einen ersten, drehfest mit der Stellwelle 24 verbundenen Ringkörper 25. Dieser Ringkörper 25 trägt mehrere, radial nach außen hin offene Taschen T zur Aufnahme jeweils eines Anschlaggliedes G eines zweiten, den inneren Ringkörper 25 konzentrisch umgebenden äußeren Ringkörper 26. Die Anschlagglieder G sind als Zapfen ausgebildet und greifen in jeweils eine Tasche T ein. Die Bemessung der Anschlagglieder G bezüglich der lichten Weite einer Tasche T ist dergestalt vorgesehen, daß in Drehrichtung jedes Anschlagglied G mit Spiel in einer Tasche T aufgenommen ist. Zwischen den in Drehrichtung seitlichen Begrenzungen einer Tasche T und einem Anschlagglied G sind jeweils Druckfedern angeordnet, um, insbesondere bei Nichtbetätigung der Stellwelle 24 eine zentrierte Anordnung der Anschlagglieder G in den Taschen T zu erreichen. Konzentrisch ist der Ringkörper 26 von einer Aktiviereinrichtung 27 umgeben, die einen schellenartig angeordneten geöffneten Ring 28 und einen Elektromagneten 29 umfaßt. Der äußere Ringkörper 26 zeigt eine Zahnung; innenseitig an dem schellenartigen Ring 28 ist eine komplementäre Zahnung angeordnet. Figur 4 zeigt die Aktiviereinrichtung in ihrem abgeschalteten Zustand, so daß die Stellwelle 24 frei drehbar ist.

Zur Realisierung eines Anschlages wird der Elektromagnet 29 angesteuert, so daß sich der schellenartige Ring 28 schließt und die Verzahnung des Ringes 28 mit derjenigen des äußeren Ringkörpers 26 in Eingriff gestellt wird. Da die Aktiviereinrichtung 27 ortsfest bezüglich einer Drehbewegung der Stellwelle 24 und insbesondere auch des Ringkörpers 26 angeordnet ist, ist in dieser, in Figur 5 gezeigten Stellung, eine Drehbewegung der Stellwelle 24 behindert. Ausgeübt worden ist mit der Stellwelle 24 zuvor eine Drehbewegung im Uhrzeigersinn, wie dies durch die an den linken Anschlägen der Taschen T anliegenden Anschlaggliedern G erkennbar ist. Die auf dieser Seite angeordnete Feder ist auf Block gegangen. Das verbleibende Spiel, mit dem jedes Anschlagglied G in einer Tasche T angeordnet ist, befindet sich in der in Figur 5 gezeigten Stellung der Stellwelle 24 vollständig in der von dem wirksamen Anschlag einer Tasche T weg gerichteten Drehrichtung. In dieser Richtung bleibt die Stellwelle 24 bis zu dem weiteren Anschlag jeder Tasche T bewegbar. Das Erfassen einer Drehbewegung innerhalb dieses Spiels mit einer auch bezüglich dieses Ausführungsbeispieles nicht dargestellten Winkeldetektionseinrichtung führt wie auch bei dem Drehsteller 1 der Figuren 1 - 3 zu einer Entriegelung und einem Abschalten der Aktiviereinrichtung 27, so daß anschließend die Stellwelle 24 wiederum frei bewegbar ist.

Die in den Ausführungsbeispielen gezeigten Anschlageinrichtungen sind so aufgebaut, daß letztendlich die Anschlagglieder ständig in die Anschlaganordnung eingreifen. Bei einer freien Drehbarkeit der jeweiligen Stellwelle dreht sich somit die Anschlaganordnung mit. Beim Aktivieren der Anschlageinrichtung zum Begrenzen der Drehbewegung der Stellwelle wird eines der beiden Elemente - Anschlagglied oder Anschlaganordnung - ortsfest festgelegt, um eine weitere Drehbewegung der Stellwelle zu behindern. Aktiviert werden kann die Anschlageinrichtung in Abhängigkeit von dem jeweilig aktuellen Zustand der Stellung der Stellwelle, die über die Winkeldetektionseinrichtung durch einen Controller überwacht wird. Auf diese Weise können mehrere Menüpunkte nach Art einer Liste mit der Stellwelle durchfahren werden und ein Anschlag wird am Ende der Liste gesetzt. Gleichfalls ist es möglich, bei einer Änderung der Listenlänge, softwareseitig die Positionen des Setzens der Anschläge bzw. des Aktivierens der Anschlageinrichtungen zu ändern.

Anstelle der in den Figuren gezeigten Elektromagneten als Aktiviereinrichtungen können insbesondere für die für die Haptik verantwortlichen Aktiviereinrichtung auch beheizbare Memory-Metalle eingesetzt werden. Vorteilhaft bei einem Einsatz derartiger Aktiviereinrichtungen ist, daß diese geräuschlos arbeiten.

### Bezugszeichenliste

- 1: Drehsteller
- 2: Stellwelle
- 3: Drehknopf, Handhabe
- 4: Blende
- 5: Haptikerzeugungseinrichtung
- 6: Rastkurvenring
- 7: Rastkurvenring
- 8: Bremsflansch
- 9: Rasthülsenbaugruppe
- 10: Rasthülsenbaugruppe
- 11: Druckfeder
- 12, 12': Rastbolzen
- 13: Aufnahme
- 14: Spannglocke
- 15: Aktiviereinrichtung
- 16: Aktiviereinrichtung
- 17: Aktiviereinrichtung
- 18: Spannring
- 19: Elektromagnet
- 20: Gestänge
- 21: Ringkörper
- 22: Drehsteller
- 23: Anschlageinrichtung
- 24: Stellwelle
- 25: Ringkörper
- 26: Ringkörper
- 27: Aktiviereinrichtung
- 28: schellenartiger Ring
- 29: Elektromagnet

- A: Anschlagbalken
- G: Anschlagglied
- S_{B}: Biegespeiche
- T: Tasche

## Patentansprüche

1. Drehsteller umfassend eine drehbar gelagerte Stellwelle (2, 24), eine zur Begrenzung der Drehbewegung der Stellwelle (2, 24) in der einen oder der anderen Drehrichtung aktivierbare mechanische Anschlageinrichtung (23) sowie eine Winkeldetektionseinrichtung zur Detektion einer Drehbewegung der Stellwelle (2, 24), wobei zum Begrenzen der Drehbewegung der Stellwelle (2, 24) in einer Drehrichtung die aktivierte Anschlageinrichtung (23) dergestalt auf die Stellwelle (2, 24) einwirkend ausgebildet ist, dass die Stellwelle (2, 24) in ihrer durch die Anschlageinrichtung (23) zu blockierenden Drehrichtung an einer weiteren Drehbewegung behindert ist, **dadurch gekennzeichnet, dass** die Anschlageinrichtung (23) eine durch zwei durch eine Tasche gebildete Anschläge dargestelle Anschlaganordnung sowie ein mit dieser kooperierendes Anschlagglied (A, G) umfasst, und dass die Stellwelle (2, 24) in ihrer der zu blockierenden Drehrichtung entgegengesetzten Drehrichtung mit Spiel in der Anschlaganordnung gehalten ist, wobei das durch die Anschlaganordung bereitgestellte Spiel so bemessen ist, dass eine Bewegung der Stellwelle (2, 24) in der nicht blockierten Drehrichtung von der Winkeldetektioneinrichtung erfaßbar ist wobei
die Anschlageinrichtung (23) einen die Stellwelle (2, 24) konzentrisch umgebenden und an die Drehbewegung der Stellwelle (2, 24) gekoppelten Ringkörper (21, 26) sowie eine gegenüber einer Drehbewegung des Ringkörpers (21, 26) ortsfest angeordnete Aktiviereinrichtung (17, 27) zum Blockieren der Drehbewegung des Ringkörpers (21, 26) umfaßt, und wobei
das Anschlagglied (A, G) der Stellwelle (2, 24) oder dem Ringkörper (26) zugeordnet ist, dass die Anschlaganordnung dem jeweils anderen Element - Ringkörper (21, 26) bzw. Stellwelle (24) - zugeordnet und durch die in radialer Richtung zum anderen Element (2, 24 bzw. 26) hin offene Tasche (T) gebildet ist, deren in Drehrichtung rechte und linke Begrenzung die Anschläge bilden, in welche das Anschlagglied (A, G) eingreift.

2. Drehsteller nach Anspruch 1, **dadurch gekennzeichnet, dass** das Anschlagglied ein Balken oder eine Nase ist.

3. Drehsteller nach Anspruch 1 oder 2, **dadurch gekennzeichnet, dass** das Anschlagglied (G) im wesentlichen zentriert in der Anschlaganordnung durch sich an den Anschlägen abstützende Federelemente zumindest bei einer Nichtbetätigung der Handhabe gehalten ist.

4. Drehsteller nach einem der Ansprüche 1 bis 3, **dadurch gekennzeichnet, dass** der Drehsteller (1) eine Einrichtung (5) zum Erzeugen einer Haptik beim Drehen der Handhabe (3) aufweist, wobei diese Einrichtung (5) nach Art einer mechanischen Rastung ausgebildet ist und eine Rastkurve und zumindest ein in die Rastkurve eingreifendes Rastelement (12, 12') umfaßt und der Haptikerzeugungseinrichtung (5) eine Aktiviereinrichtung (15, 16) zugeordnet ist, die dergestalt auf die Rastkurve oder das zumindest eine Rastelement (12, 12') wirkend ausgelegt ist, dass durch Ansteuern der Aktiviereinrichtung (15, 16) ein Zusammenwirken zwischen dem zumindest einen Rastelement (12, 12') und der Rastkurve zum Erzeugen der durch die Rastkurve geprägten Haptik bei einer Drehbewegung der Stellwelle (2) zu- bzw. abschaltbar ist.

5. Drehsteller nach Anspruch 4, **dadurch gekennzeichnet, dass** die Aktiviereinrichtung (15, 16) bei ihrer Aktivierung auf einen die Rastkurve tragenden, die Stellwelle (2) konzentrisch umgebenden Ringkörper (6, 7) wirkt, in dessen Rastkurve das zumindest eine unter einer Federvorspannung stehende und mit der Stellwelle (2) verbundene Rastelement (12, 12') eingreift, indem der die Rastkurve tragende Ringkörper (6, 7) durch die Aktiviereinrichtung (15, 16) gegenüber einer Drehbewegung der Stellwelle (2) festgelegt ist.

6. Drehsteller nach Anspruch 5, **dadurch gekennzeichnet, dass** zwischen der Aktiviereinrichtung (15, 16) und dem die Rastkurve tragenden Ringkörper (6, 7) eine reibschlüssige Verbindung bei einer Aktivierung der Aktiviereinrichtung (15, 16) hergestellt ist.

7. Drehsteller nach Anspruch 5, **dadurch gekennzeichnet, dass** zwischen der Aktiviereinrichtung und dem die Rastkurve tragenden Ringkörper eine formschlüssige Verbindung bei einer Aktivierung der Aktiviereinrichtung hergestellt ist.

8. Drehsteller nach Anspruch 6, **dadurch gekennzeichnet, dass** als Aktiviereinrichtung (15, 16) ein den die Rastkurve tragenden Ringkörper (6, 7) konzentrisch umgebender elektromagnetisch betätigbarer Spannring (18) eingesetzt ist, in dem bei aktivierter Aktiviereinrichtung (15, 16) der Ringkörper (6, 7) drehfest gehalten ist.

9. Drehsteller nach einem der Ansprüche 5 - 8, **dadurch gekennzeichnet, dass** die Haptikerzeugungseinrichtung zumindest eine weitere Rastkurve sowie zumindest ein weiteres, in die Rastkurve eingreifendes Rastelement umfaßt, auf welche Elemente - Rastkurve bzw. Rastelement - zu ihrem Zusammenwirken zum Erzeugen einer Haptik eine weitere Aktiviereinrichtung wirkt.

10. Drehsteller nach Anspruch 9 in seinem Rückbezug auf Anspruch 5, **dadurch gekennzeichnet, dass** die die Rastkurven tragenden Ringkörper (6, 7) benachbart in unterschiedlichen Ebenen bezüglich der Längserstreckung der Stellwelle (2) angeordnet sind.

11. Drehsteller nach einem der Ansprüche 5 - 10, **dadurch gekennzeichnet, dass** eine auf die Stellwelle (2) einwirkende und eine Drehbewegung beeinflussende Akltiviereinrichtung (17) vorgesehen ist.

12. Drehsteller nach Anspruch 11, **dadurch gekennzeichnet, dass** als auf die Stellwelle (2) einwirkende Aktiviereinrichtung (17) ein elektromagnetisch betätigbarer Spannring eingesetzt ist, der konzentrisch einen mit der Stellwelle (2) verbundenen Bremsflansch (8) umgibt.

13. Drehsteller nach einem der Ansprüche 9 - 12, **dadurch gekennzeichnet, dass** die eingesetzten Aktiviereinrichtungen (15, 16, 17) in einer Baugruppe (14) zusammengefaßt sind.

## Claims

1. Rotary actuator comprising a pivoted actuating shaft (2, 24), a mechanical limit stop device (23) which can be activated in either direction of rotation for the purpose of limiting the rotary motion of the actuating shaft (2, 24), and an angle detection appliance for detecting any rotary motion of the actuating shaft (2, 24) whereby, for the purpose of limiting the rotary motion of the actuating shaft (2, 24) in either direction, the activated limit stop device (23) is designed to act on the actuating shaft (2, 24) in such a manner that the actuating shaft (2, 24) is prevented from any further rotary motion in the direction of its rotation to be blocked by the limit stop device (23), **characterised in that** the limit stop device (23) consists of a limit stop arrangement embodied by two limit stops formed by a pouch and a limit stop member (A, G) cooperating with the same, and that the actuating shaft (2, 24) is held with play in the limit stop arrangement in the direction of rotation opposing the direction of rotation to be blocked, with the play provided by the limit stop arrangement being so dimensioned that any movement of the actuating shaft (2, 24) in the unblocked direction of rotation can be identified by the angle detection appliance, with the limit stop device (23) comprising an annular element (21, 26) which concentrically encompasses the actuating shaft (2, 24) and is coupled to the rotary motion of the actuating shaft (2, 24), as well as an activating appliance (17, 27) arranged in a fixed position in relation to any rotary motion of the annular element (21, 26) so as to block the rotary motion of the annular element (21, 26), and with the limit stop member (A, G) being assigned to the actuating shaft (2, 24) or to the annular element (26) and the limit stop arrangement being assigned to the other element - annular element (21, 26) or actuating shaft (24), respectively - and being formed by the pouch (T) which is open in the radial direction to the other element (2, 24 or 26) and whose right-hand and left-hand boundaries in the direction of rotation form the limit stops in which the limit stop member (A, G) engages.

2. Rotary actuator in accordance with Claim 1, **characterised in that** the limit stop member is a bar or a tappet.

3. Rotary actuator in accordance with Claim 1 or Claim 2, **characterised in that**, at least when the handle is not in operation, the limit stop member (G) is held essentially centred in the limit stop arrangement by means of resilient elements supported on the limit stops.

4. Rotary actuator in accordance with any of Claims 1 to 3, **characterised in that** the rotary actuator (1) has a facility (5) for generating haptics upon rotating the handle (3), this facility (5) being designed in the manner of a mechanical detent and comprising a latching curve and at least one latching element (12, 12') that engages in the latching curve, and with an activating device (15, 16) assigned to the facility (5) generating haptics which is designed to influence the latching curve or the at least one latching element (12, 12') in such a manner that, by means of controlling the activating device (15, 16), any interaction between the at least one latching element (12, 12') and the latching curve for the purpose of generating the haptics **characterised by** the latching curve can be connected or disconnected whenever there is a rotary motion of the actuating shaft (2).

5. Rotary actuator in accordance with Claim 4, **characterised in that**, when it is activated, the activating device (15, 16) has an influence on an annular element (6, 7) which bears the latching curve and concentrically encompasses the actuating shaft (2) and in the latching curve of which engages the at least one latching element (12, 12') which is spring-loaded and connected to the actuating shaft (2) by means of the annular element (6, 7) bearing the latching curve being fixed by the activating device (15, 16) in relation to a rotary motion of the actuating shaft (2).

6. Rotary actuator in accordance with Claim 5, **characterised in that**, upon the activating device (15, 16) being activated, a friction connection is established between the activating device (15, 16) and the annular element (6, 7) bearing the latching curve.

7. Rotary actuator in accordance with Claim 5, **characterised in that**, upon the activating device (15, 16) being activated, a form-fit connection is established between the activating device and the annular element bearing the latching curve.

8. Rotary actuator in accordance with Claim 6, **characterised in that** an electromagnetically operable tension ring (18) which concentrically encompasses the annular element (6, 7) bearing the latching curve, is utilised as the activating device (15, 16) in which the annular element (6, 7) is held in a torque-proof manner when the activating device (15, 16) is activated.

9. Rotary actuator in accordance with any of Claims 5 to 8, **characterised in that** the facility for generating haptics comprises at least one further latching curve as well as at least one further latching element engaging in the latching curve, with a further activating device acting on the said elements - latching curve or latching element - for the purpose of their interacting to generate haptics.

10. Rotary actuator in accordance with Claim 9 in its reference to Claim 5, **characterised in that** the annular elements (6, 7) bearing the latching curves are arranged adjacently at different levels in relation to the longitudinal extension of the actuating shaft (2).

11. Rotary actuator in accordance with any of Claims 5 to 10, **characterised in that** an activating device (17) is provided which acts on the actuating shaft (2) and influences a rotary motion.

12. Rotary actuator in accordance with Claim 11, **characterised in that** an electromagnetically operable tension ring is utilised as an activating device (17) which acts on the actuating shaft (2) and concentrically encompasses a braking flange (8) connected to the actuating shaft (2).

13. Rotary actuator in accordance with any of Claims 9 to 12, **characterised in that** the utilised activating devices (15, 16, 17) are aggregated into an assembly group (14).

## Revendications

1. Actionneur rotatif, qui comprend un arbre de réglage (2, 24), monté à rotation, un dispositif de blocage (23) mécanique, qui peut être activé pour limiter le mouvement de rotation de l'arbre de réglage (2, 24) dans l'une ou dans l'autre direction de rotation, ainsi qu'un dispositif de détection d'angle pour la détection d'un mouvement de rotation de l'arbre de réglage (2, 24), sachant que, pour limiter le mouvement de rotation de l'arbre de réglage (2, 24) dans une direction de rotation, le dispositif de blocage (23) activé agit sur ledit arbre de réglage (2, 24) de sorte qu'il empêche ledit arbre de réglage (2, 24) d'exécuter un autre mouvement de rotation dans la direction de rotation à bloquer par le dispositif de blocage (23), **caractérisé en ce que** le dispositif de blocage (23) comprend un agencement de blocage, composé de deux butées, qui sont formées par une poche, ainsi qu'un organe de blocage (A, G), qui coopère avec celui-ci, et que l'arbre de réglage (2, 24) est maintenu, avec jeu, dans ledit agencement de blocage, dans sa direction de rotation, opposée à la direction de rotation à bloquer, sachant que le jeu alloué par l'agencement de blocage est dimensionné de sorte qu'un mouvement de l'arbre de réglage (2, 24) dans la direction de rotation non bloquée puisse être détecté par le dispositif de détection d'angle, sachant que le dispositif de blocage (23) comprend un corps annulaire (21, 26), qui entoure concentriquement l'arbre de réglage (2, 24) et est couplé avec le mouvement de rotation dudit arbre de réglage (2, 24), ainsi qu'un dispositif d'activation (17, 27), fixe par rapport à un mouvement de rotation du corps annulaire (21, 26), pour le blocage du mouvement de rotation du corps annulaire (21, 26), et sachant que l'organe de blocage (A, G) est associé à l'arbre de réglage (2, 24) ou au corps annulaire (26), que l'agencement de blocage est associé à l'autre élément - corps annulaire (21, 26), respectivement arbre de réglage (24) - et est formé par la poche (T), ouverte, dans la direction radiale, vers ledit autre élément (2, 24 respectivement 26), dont les limites droite et gauche, dans la direction de rotation, forment les butées, avec lesquelles l'organe de blocage (A, G) coopère.

2. Actionneur selon la revendication 1, **caractérisé en ce que** l'organe de blocage est une barre ou un nez.

3. Actionneur selon revendication 1 ou 2, **caractérisé en ce qu'**au moins lors d'un non actionnement de la poignée, l'organe de blocage (G) est maintenu, sensiblement centré dans l'agencement de blocage, par des éléments élastiques, qui s'appuient contre les butées.

4. Actionneur selon l'une des revendications 1 à 3, **caractérisé en ce que** l'actionneur rotatif (1) est doté d'un dispositif (5), qui génère un effet haptique lors de la rotation de la poignée (3), sachant que ce dispositif (5) est réalisé à la manière d'un enclenchement mécanique et comprend au moins une came et au moins un élément d'arrêt (12, 12'), qui s'engage dans ladite came, et qu'au dispositif haptique (5) est associé un dispositif d'activation (15, 16), qui agit sur la came ou sur l'élément d'arrêt (12, 12') au moins prévu, de sorte que, par excitation du dispositifs d'activation (15, 16), une coopération entre l'élément d'arrêt (12, 12') au moins prévu et la came, pour générer l'effet haptique, lors d'un mouvement de rotation de l'arbre de réglage (2), peut être activée, resp désactivée.

5. Actionneur selon la revendication 4, **caractérisé en ce que**, lors de son activation, le dispositif d'activation (15, 16) agit sur un corps annulaire (6, 7), qui, portant la came, entoure concentriquement l'arbre de réglage (2), et dans la came duquel s'engage l'élément d'arrêt (12, 12') au moins prévu, qui est élastiquement précontraint et relié à l'arbre de réglage (2), le corps annulaire (6, 7), qui porte la came, étant fixé par rapport à un mouvement de rotation de l'arbre de réglage (2) par le dispositif d'activation (15, 16).

6. Actionneur selon la revendication 5, **caractérisé en ce que**, lors d'une activation du dispositif d'activation (15, 16), une liaison par adhérence est réalisée entre le dispositif d'activation (15, 16) et le corps annulaire (6, 7), qui porte la came.

7. Actionneur selon la revendication 5, **caractérisé en ce que**, lors d'une activation du dispositif d'activation, une liaison par emboîtement géométrique est réalisée entre le dispositif d'activation et le corps annulaire, qui porte la came.

8. Actionneur selon la revendication 6, **caractérisé en ce que** l'on utilise, en tant que dispositif d'activation (15, 16), un anneau de serrage (18) à commande électromagnétique, qui entoure concentriquement le corps annulaire (6, 7) portant la came, dans lequel le corps annulaire (6, 7) est maintenu, solidaire en rotation, quand le dispositif d'activation (15, 16) est activé.

9. Actionneur selon l'une des revendications 5 à 8, **caractérisé en ce que** le dispositif haptique comprend au moins une autre came, ainsi qu'au moins un autre élément d'arrêt, qui s'engage dans ladite came, éléments - came ou élément d'arrêt - sur lesquels un autre dispositif d'activation agit pour les faire coopérer afin de générer un effet haptique.

10. Actionneur selon la revendication 9, se référant à la revendication 5, **caractérisé en ce que** les corps annulaires (6, 7), qui portent les cames, sont disposés, contigus, sur des plans différents par rapport au sens longitudinal de l'arbre de réglage (2).

11. Actionneur selon l'une des revendications 5 à 10, **caractérisé en ce qu'**est prévu un dispositif d'activation (17), qui agit sur l'arbre de réglage (2) et influence un mouvement de rotation.

12. Actionneur selon la revendication 11, **caractérisé en ce que** l'on utilise en tant que dispositif d'activation (17) agissant sur l'arbre de réglage (2), un anneau de serrage à commande électromagnétique, qui entoure concentriquement une bride de freinage, (8), qui est reliée à l'arbre de réglage (2).

13. Actionneur selon l'une des revendications 9 à 12, **caractérisé en ce que** les dispositifs d'activation (15, 16, 17) mis en oeuvre sont groupé en un ensemble (14).
